# EUROPEAN PATENT APPLICATION

(11) **EP 4 625 775 A2**
(43) Date of publication of application: **01.10.2025**
(21) Application number: 25163231.1
(22) Date of filing: 12.03.2025
(51) Int. Cl.: H02K 5/173, H02K 7/116

(54) **MOTOR DEVICE**

(30) Priority: 28.03.2024 JP 2024053808
(71) Applicant: Mitsuba Corporation, Kiryu-shi, Gunma 376-8555 (JP)
(72) Inventor: SAITA, Yuki, Kiryu-shi, Gunma, 376-8555 (JP); TOZUKA, Yosuke, Kiryu-shi, Gunma, 376-8555 (JP)
(74) Representative: Winter, Brandl - Partnerschaft mbB

(57) **Abstract**

A motor device (10) includes: a first ball bearing (23) rotatably supporting a rotation shaft (41), and a first sun gear (71) mounted to an end part of the rotation shaft and disposed at the center of a first planetary gear reducer (70). A motor case (21) is provided with a bearing support tube (22a) disposed coaxially with respect to the rotation shaft, and a gear case (61) is provided with a through hole (63b) of a blocking member (63) disposed coaxially with respect to the first sun gear. Both axial sides of the first ball bearing are respectively mounted to the bearing support tube and the through hole. Thus, the rotation centers of the rotation shaft and the first planetary gear reducer can be precisely aligned with each other based on the first ball bearing regardless of the molding accuracy of the motor case.

## Description

### [Technical Field]

The disclosure relates to a motor device having a planetary gear reducer.

### [Background Art]

For example, Patent Document 1 describes a geared motor that includes a motor having a rotation shaft, and a planetary gear mechanism reducing the rotation of the rotation shaft. The rotation shaft is rotatably supported by a bearing fixed to a housing, and a sun gear is fixed to the rotation shaft. The sun gear, together with a ring gear and a pinion gear provided on the inner side of a case, forms a planetary gear reducer.

### [Related Art Documents]

### [Patent Documents]

[Patent Document 1] Japanese Patent Application Laid-Open No. 2021-121742

### SUMMARY OF INVENTION

### [Problem to Be Solved by Invention]

In the technique described in Patent Document 1, the rotation shaft is rotatably supported by a bearing fixed to the radially inner side of a protrusion of the housing. In addition, the sun gear fixed to the rotation shaft is rotatably supported via a pinion gear, with respect to the ring gear of the case fixed to the radially outer side of the protrusion of the housing.

Therefore, the alignment or misalignment between the rotation center of the rotation shaft and the rotation center of the planetary gear reducer including the sun gear depends on the molding accuracy of the protrusion of the housing. When the molding accuracy of the protrusion of the housing is low, the rotation center of the rotation shaft and the rotation center of the planetary gear reducer may shift from each other, and the driving force from the rotation shaft to the planetary gear reducer may not be transmitted smoothly, causing a problem that motor characteristics vary from product to product.

An objective of the disclosure is to provide a motor device capable of smoothly transmitting the driving force from the rotation shaft to the planetary gear reducer.

### [Means for Solving Problem]

An aspect of the motor device is a motor device including: a motor case rotatably accommodating a rotation shaft, and a gear case rotatably accommodating a planetary gear reducer, in which the motor case and the gear case are arranged in an axial direction of the rotation shaft. The motor device has a bearing rotatably supporting the rotation shaft, and a sun gear mounted to an end part of the rotation shaft and disposed at a center of the planetary gear reducer. The motor case is provided with a first bearing mounting part that is disposed coaxially with respect to the rotation shaft, the gear case is provided with a second bearing mounting part that is disposed coaxially with respect to the sun gear, and both axial sides of the bearing are respectively mounted to the first bearing mounting part and the second bearing mounting part.

### [Effects of Invention]

According to the disclosure, it is possible to realize a motor device capable of smoothly transmitting the driving force from the rotation shaft to the planetary gear reducer.

### BRIEF DESCRIPTION OF DRAWINGS

FIG. 1 is a perspective view showing a seat motor mounted in a vehicle.
FIG. 2 is a cross-sectional view along an axial direction of a rotation shaft of the seat motor in FIG. 1.
FIG. 3 is an enlarged cross-sectional view showing the vicinity of a first ball bearing.
FIG. 4 is an enlarged cross-sectional view showing the vicinity of a second ball bearing.
FIG. 5 is a perspective view of a gear case alone as viewed from a small-diameter part side.
FIG. 6 is a perspective view of the gear case alone as viewed from a case opening side.
FIG. 7 is a perspective view of a blocking member alone as viewed from a gear case side.
FIG. 8 is a perspective view of the blocking member alone as viewed from an electric motor part side.
FIG. 9 is an exploded perspective view showing a rotor, a first planetary gear reducer, and a second planetary gear reducer.
FIG. 10 is a view illustrating a <rotor core mounting process>.
FIG. 11 is a view illustrating a <first opposing member mounting process>.
FIG. 12 is a view illustrating an <adhesive application process>.
FIG. 13 is a view illustrating a <ring magnet mounting process>.
FIG. 14 is a view illustrating a <second opposing member abutting process>.

### EMBODIMENTS FOR IMPLEMENTING INVENTION

Hereinafter, an embodiment of the disclosure will be described in detail with reference to the drawings.

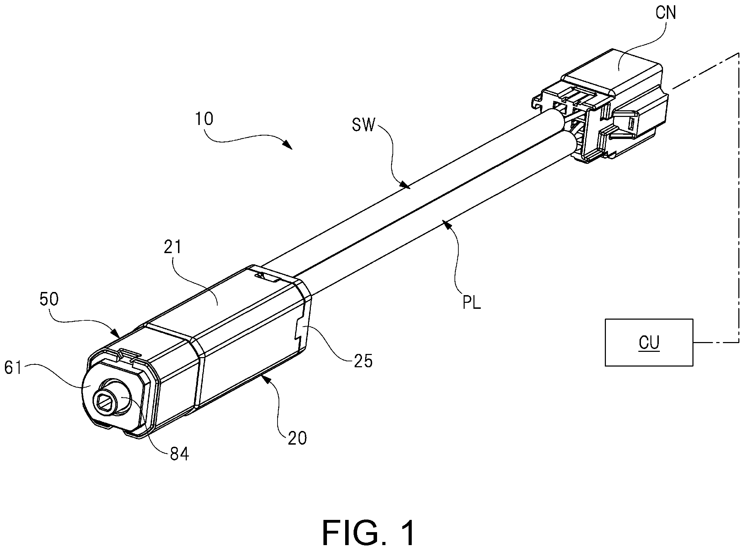

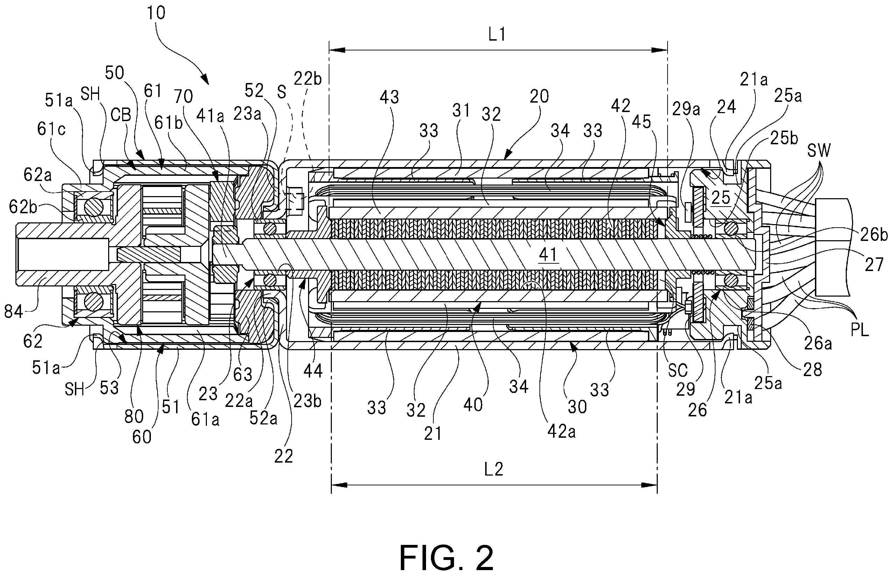

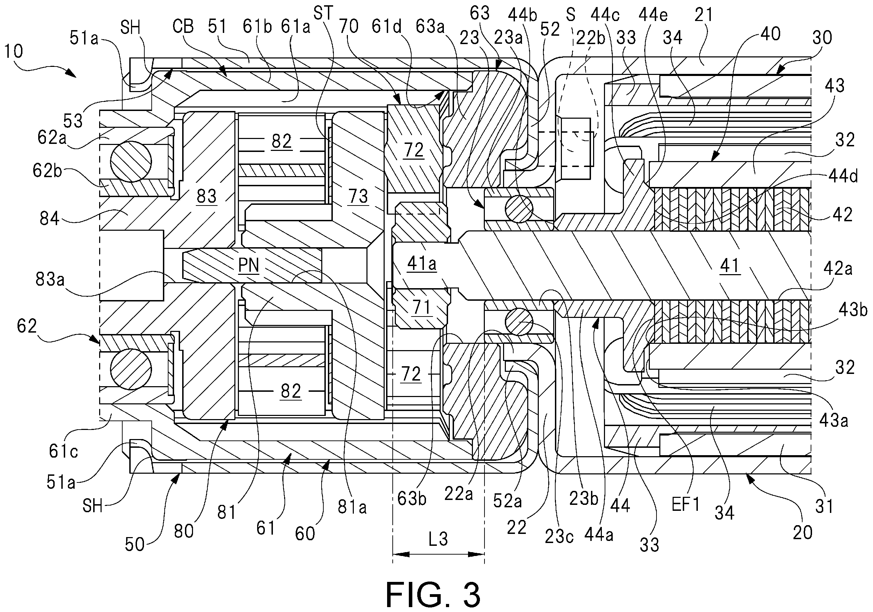

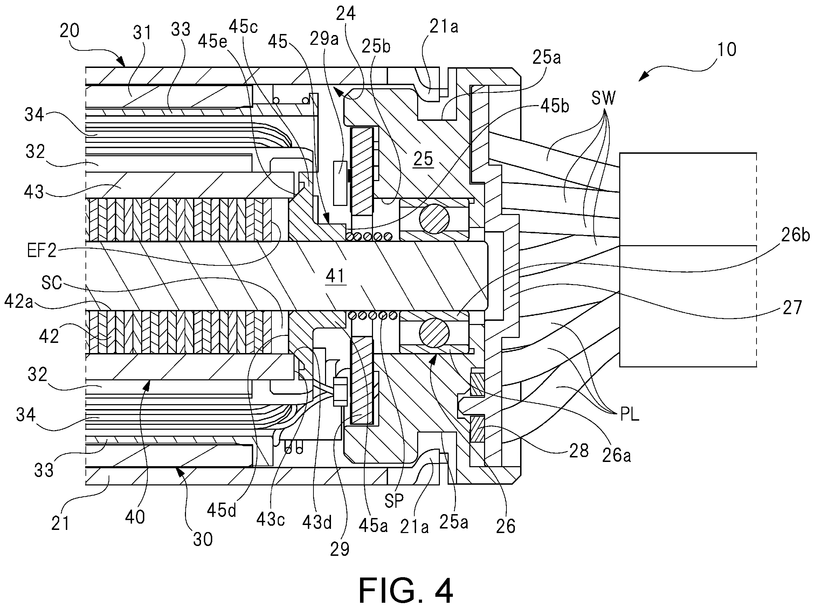

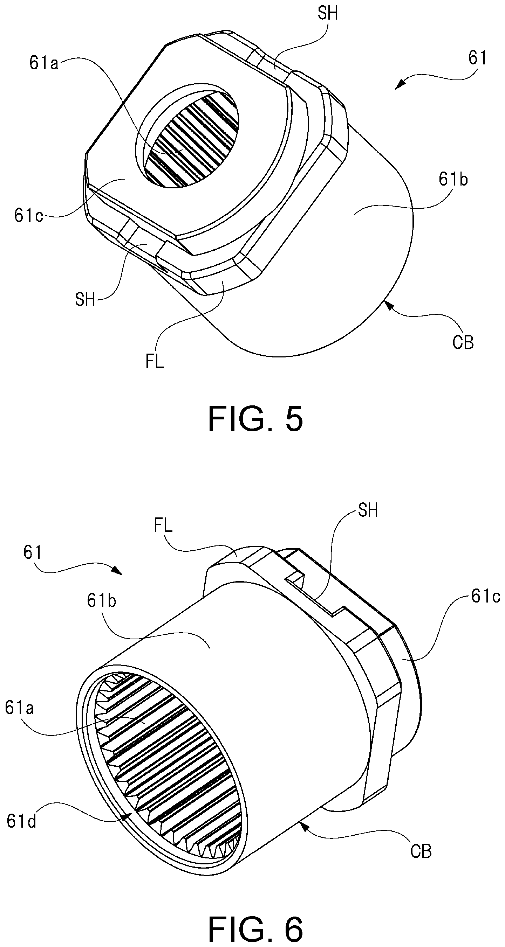

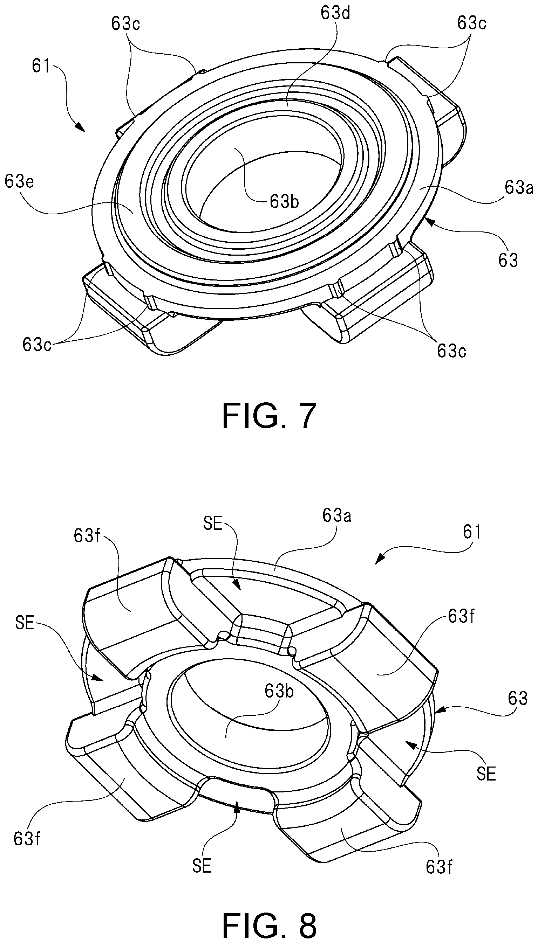

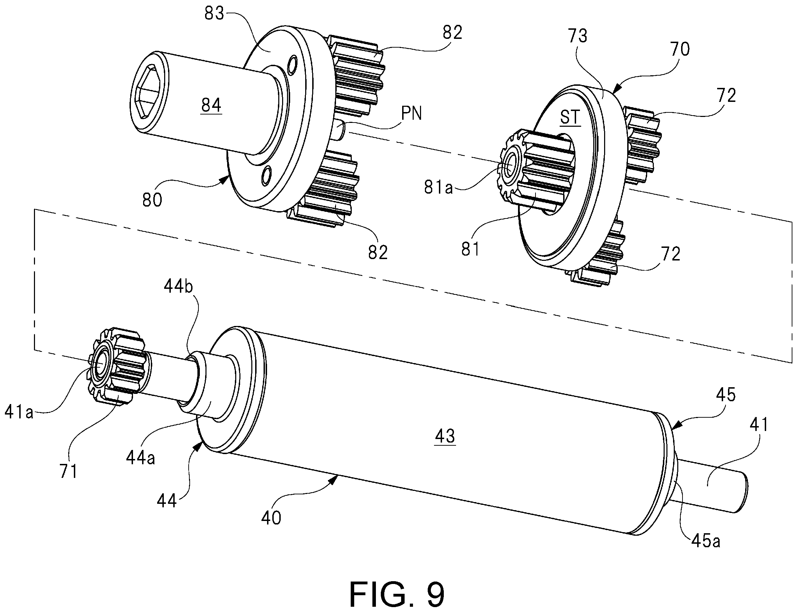

FIG. 1 shows a perspective view of a seat motor mounted in a vehicle. FIG. 2 shows a cross-sectional view along an axial direction of a rotation shaft of the seat motor in FIG. 1. FIG. 3 shows an enlarged cross-sectional view illustrating the vicinity of a first ball bearing. FIG. 4 shows an enlarged cross-sectional view illustrating the vicinity of a second ball bearing. FIG. 5 shows a perspective view of a gear case alone as viewed from a small-diameter part side. FIG. 6 shows a perspective view of the gear case alone as viewed from a case opening side. FIG. 7 shows a perspective view of a blocking member alone as viewed from a gear case side. FIG. 8 shows a perspective view of the blocking member alone as viewed from an electric motor part side. FIG. 9 shows an exploded perspective view illustrating a rotor, a first planetary gear reducer, and a second planetary gear reducer.

### <Overview of electric seat>

A seat motor 10 shown in FIG. 1 is a driving source incorporated in an electric seat mounted in a vehicle such as an automobile. Specifically, the seat motor 10 drives a reclining mechanism of a backrest, a movement mechanism moving the electric seat back and forth, a lifting mechanism raising and lowering a seat part, etc. Accordingly, a driver may adjust a posture and a position of the electric seat to the driver's desired driving position by operating an operation switch disposed, for example, beside the electric seat.

The seat motor 10 corresponds to a motor device in the disclosure.

The seat motor 10 includes a connector CN, and the connector CN is electrically connected to a vehicle-mounted controller CU. Between an electric motor part 20 forming the seat motor 10 and the connector CN, power cords PL supplying driving current to the electric motor part 20 and sensor wires SW sending a rotational state of the electric motor part 20 to the vehicle-mounted controller CU are disposed.

Accordingly, the vehicle-mounted controller CU is capable of storing multiple driving positions (postures of the electric seat) corresponding to drivers of different physiques, for example. Thus, it becomes possible to set to a driving position desired by the driver as needed.

### <Seat motor>

As shown in FIG. 1 to FIG. 4, the seat motor 10 includes an electric motor part 20 and a speed reduction mechanism part 50. The electric motor part 20 and the speed reduction mechanism part 50 are disposed coaxially with each other, and an overall shape of the seat motor 10 is an approximately rod shape that is short and angular. Thus, the seat motor 10 is formed by arranging the electric motor part 20 and the speed reduction mechanism part 50 in the axial direction of a rotation shaft 41.

### <Electric motor part>

The electric motor part 20 includes a motor case 21. The motor case 21 is formed into a bottomed tubular shape by, for example, performing deep drawing on a steel plate, and a cross-sectional shape along a direction perpendicular to a longitudinal direction thereof is approximately square.

In addition, as shown in FIG. 2 and FIG. 3, a bottom wall part 22 is provided on one axial side (left side in the figure) of the motor case 21. A bearing support tube 22a is integrally provided at a center of the bottom wall part 22, and an outer ring (outer race) 23a disposed on the radially outer side of a first ball bearing 23 is press-fitted and fixed to the bearing support tube 22a.

It should be noted that the bearing support tube 22a is disposed coaxially with respect to the rotation shaft 41, and corresponds to a first bearing mounting part in the disclosure.

Herein, an approximately 2/3 portion of the other axial side (right side in the figure) of the outer ring 23a is press-fitted and fixed to the bearing support tube 22a. Further, an approximately 1/3 portion of the one axial side of the outer ring 23a is exposed (protruding) from the bearing support tube 22a to the one axial side thereof.

Additionally, the first ball bearing 23 rotatably supports the one axial side of the rotation shaft 41, and an inner ring (inner race) 23b disposed on the radially inner side of the first ball bearing 23 is mounted to the one axial side of the rotation shaft 41. In the axial direction of the rotation shaft 41, the side on which the speed reduction mechanism part 50 of the seat motor 10 is disposed is defined as "one axial side", and the side on which the connector CN of the seat motor 10 is disposed is defined as "other axial side".

Furthermore, a pair of screw holes 22b (only one is shown in FIG. 2 and FIG. 3) are provided in the bottom wall part 22. Specifically, the pair of screw holes 22b are disposed opposed to each other, centered on the bearing support tube 22a. Then, fixing screws S for fixing the speed reduction mechanism part 50 to the electric motor part 20 are screwed into the respective screw holes 22b.

As shown in FIG. 2 and FIG. 4, an opening part 24 is provided on the other axial side of the motor case 21, i.e., on the side opposite to the bottom wall part 22 side. A stator 30 and a rotor 40 are incorporated on the inner side of the motor case 21 via the opening part 24. In other words, the rotation shaft 41 is rotatably accommodated inside the motor case 21.

A cover member 25 composed of a resin material such as plastic is mounted to the opening part 24. The cover member 25 blocks the opening part 24, and accordingly, dust and the like are prevented from entering inside of the motor case 21. Herein, multiple engagement recesses 25a are provided at an outer circumferential part of the cover member 25, and engagement claws 21a of the motor case 21 are engaged with the engagement recesses 25a. Accordingly, the cover member 25 is in a state in which the cover member 25 does not rattle and is prevented from coming off with respect to the motor case 21.

A bearing support hole 25b is provided at a central of the cover member 25, and an outer ring 26a of a second ball bearing 26 is press-fitted and fixed to the bearing support hole 25b. The second ball bearing 26 rotatably supports the other axial side of the rotation shaft 41, and an inner ring 26b of the second ball bearing 26 is mounted to the other axial side of the rotation shaft 41.

In addition, a conductive member holding plate 27 is mounted to the other axial side of the cover member 25. Three conductive members 28 (only one is shown in the figure) corresponding to U-phase, V-phase, and W-phase (three-phase) are mounted to the cover member 25 side (left side in the figure) of the conductive member holding plate 27. Furthermore, the power cords PL and the sensor wires SW are disposed on the connector CN side (right side in the figure) of the conductive member holding plate 27.

Then, three power cords PL corresponding to U-phase, V-phase, and W-phase are respectively electrically connected to one-end parts of the three conductive members 28. In contrast, coils 34 corresponding to U-phase, V-phase, and W-phase are respectively electrically connected to other-end parts of the three conductive members 28.

In addition, a sensor board 29 in an annular shape is mounted to the one axial side of the cover member 25. A total of five sensor wires SW (only four are shown in the figure) are respectively electrically connected to the connector CN side (right side in the figure) of the sensor board 29. Furthermore, three hall elements 29a (only one is shown in the figure) corresponding to U-phase, V-phase, and W-phase are respectively mounted to the stator 30 side (left side in the figure) of the sensor board 29.

Herein, the three hall elements 29a form a rotation sensor that detects a rotational state of the rotor 40 (rotation shaft 41), and are opposed to a ring magnet 43 in the axial direction of the rotation shaft 41. Accordingly, each of the hall elements 29a generates a rectangular signal in response to a change in magnetic poles accompanying rotation of the ring magnet 43. The rectangular signals generated by the hall elements 29a are sent to the vehicle-mounted controller CU (refer to FIG. 1), and accordingly, the vehicle-mounted controller CU is capable of learning about the rotational state of the rotor 40 to control a rotational speed, a rotational direction, and further, a stop position of the rotor 40.

As shown in FIG. 2 to FIG. 4, a stator 30 composed of a ferromagnetic body is fixed on the inner side of the motor case 21. The stator 30 includes a stator body 31 formed in an approximately tubular shape, and multiple teeth 32 protruding radially inward from the stator body 31. In this embodiment, the number of teeth 32 (equal to the number of slots) is set to 6. Of course, the number of teeth 32 may be set in any manner according to the specifications of the electric motor part 20.

In addition, an insulator 33 composed of a resin material such as plastic is mounted to each of the teeth 32. Coils 34 are wound around the respective teeth 32 via the insulators 33. Herein, coils 34 of a same phase are respectively wound around a pair of teeth 32 that are disposed opposed to each other centered on the rotor 40. In other words, in the circumferential direction of the stator 30, the coils 34 are arranged at equal intervals (60-degree intervals) in the order of U-phase, V-phase, W-phase, U-phase, V-phase, and W-phase.

The stator 30 is fixed by press-fitting a part of an outer circumferential part of the stator body 31 against an inner wall of the motor case 21. Thus, the stator 30 does not rattle in either the axial direction or the circumferential direction with respect to the motor case 21. In addition, the conductive members 28 corresponding to U-phase, V-phase, and W-phase are respectively electrically connected to the coils 34 corresponding to U-phase, V-phase, and W-phase.

### <Rotor>

As shown in FIG. 2 to FIG. 4, the rotor 40 is rotatably provided on the radially inner side of the stator 30 with a minute gap (air gap) therebetween. The rotor 40 includes a rotation shaft 41 composed of a stepped round steel bar. Specifically, a small-diameter part 41a is integrally provided on the one axial side of the rotation shaft 41, and a first sun gear 71 forming a first planetary gear reducer 70 of the speed reduction mechanism part 50 is fixed to the small-diameter part 41a.

In this manner, the first sun gear 71 is mounted to an end part of the rotation shaft 41, and this first sun gear 71 corresponds to a sun gear in the disclosure. In other words, the small-diameter part 41a drives the first planetary gear reducer 70 including the first sun gear 71. In addition, a planetary gear speed reduction mechanism 60, which includes the first planetary gear reducer 70 driven by the small-diameter part 41a, corresponds to a reclining mechanism or the like (not shown) that is a driving target.

Then, the one axial side of the rotation shaft 41 is rotatably supported by the first ball bearing 23, and the other axial side of the rotation shaft 41 is rotatably supported by the second ball bearing 26.

Herein, between the outer race 23a and the inner race 23b of the first ball bearing 23, multiple steel balls (balls) 23c are disposed. It should be noted that the first ball bearing 23 corresponds to a bearing and a ball bearing in the disclosure.

In addition, a rotor core 42 formed by laminating multiple steel plates composed of a ferromagnetic body is mounted to an outer circumferential part of the rotation shaft 41. Specifically, the rotor core 42 is firmly fixed at a specified position in the axial direction of the rotation shaft 41 by press-fitting a fixing hole 42a of the rotor core 42 to the rotation shaft 41.

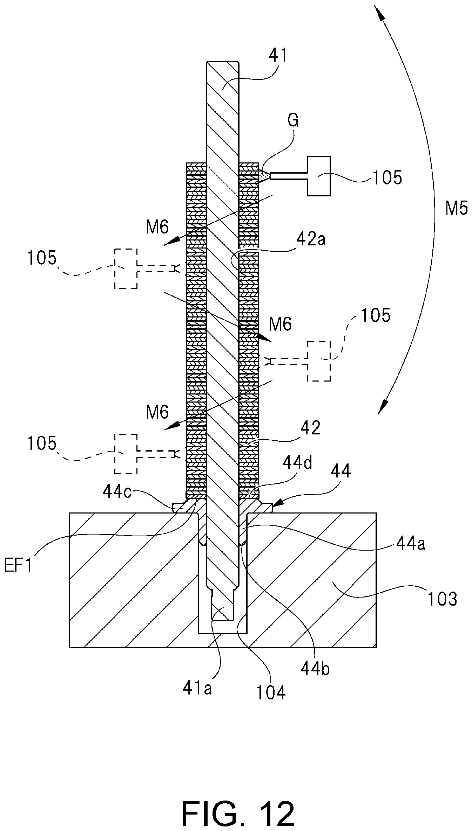

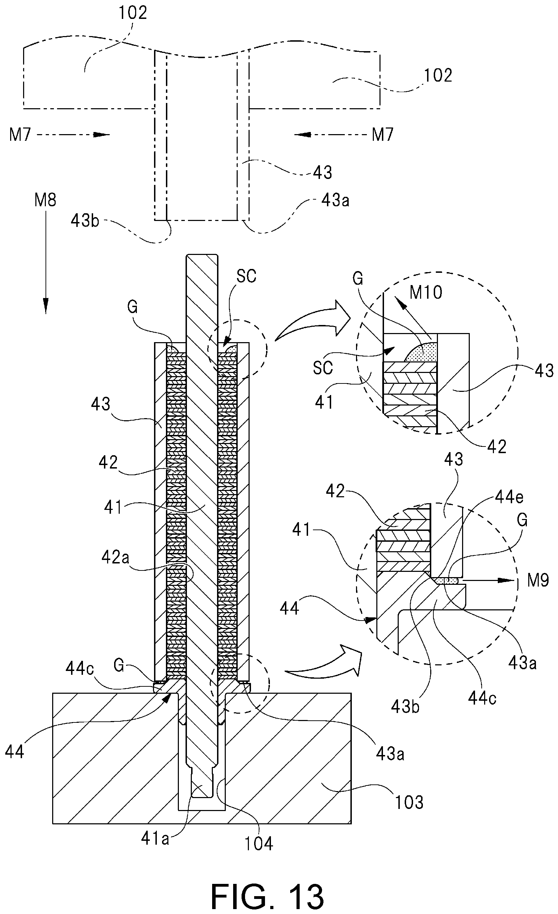

Furthermore, a ring magnet 43 is fixed to an outer circumferential part of the rotor core 42 via an adhesive G (refer to FIG. 12 and FIG. 13). The ring magnet 43 is, for example, a neodymium magnet, and is formed in an approximately tubular shape. In addition, the ring magnet 43 is magnetized such that S pole, N pole, S pole, and N pole (total of 4 poles) are alternately arranged in the circumferential direction thereof. In other words, the electric motor part 20 is a 4-pole 6-slot brushless motor. Of course, the number of poles of the ring magnet 43 may be set in any manner according to the specifications of the electric motor part 20.

Furthermore, in a direction perpendicular to the axial direction of the rotation shaft 41, a minute gap (not shown), in which the adhesive G is interposed, is formed between the ring magnet 43 and the rotor core 42. Accordingly, when mounting the ring magnet 43 to the outer circumferential part of the rotor core 42, the ring magnet 43 does not strongly rub against the rotor core 42.

In addition, as shown in FIG. 3, a first end part 43a is provided on the one axial side of the ring magnet 43, and a first inner circumferential corner part 43b is provided on the radially inner side of the first end part 43a. A first taper part 44e of a first opposing member 44 is abutted against the first inner circumferential corner part 43b. Specifically, the first inner circumferential corner part 43b is in line contact with the first taper part 44e.

Furthermore, as shown in FIG. 4, a second end part 43c is provided on the other axial side of the ring magnet 43, and a second inner circumferential corner part 43d is provided on the radially inner side of the second end part 43c. A second taper part 45e of a second opposing member 45 is abutted against the second inner circumferential corner part 43d. Specifically, the second inner circumferential corner part 43d is in line contact with the second taper part 45e.

Herein, as shown in FIG. 2, an axial length L1 of the ring magnet 43 is greater than an axial length L2 of the rotor core 42 (L1 > L2). In the axial direction of the rotation shaft 41, the first opposing member 44 is abutted against the rotor core 42, and the second opposing member 45 is separated from the rotor core 42.

### <First opposing member>

As shown in FIG. 2 and FIG. 3, the first opposing member 44 is disposed on the one axial side of the rotation shaft 41, i.e., on the small-diameter part 41a side. The first opposing member 44 is composed of a PPS resin (polyphenylene sulfide) containing glass fiber, and is opposed to the ring magnet 43 in the axial direction of the rotation shaft 41.

The first opposing member 44 includes a first fixed tubular part 44a that is fixed by press-fitting to the rotation shaft 41. A first abutting part 44b in an annular shape abutted against the inner ring 23b of the first ball bearing 23 in the axial direction of the rotation shaft 41 is provided on the one axial side of the first fixed tubular part 44a. Accordingly, the axial position of the rotation shaft 41, to which the first opposing member 44 is fixed, is specified by the first ball bearing 23.

In addition, the first opposing member 44 includes a first annular flat plate part 44c. The first annular flat plate part 44c is formed to have a larger diameter than the first fixed tubular part 44a, and is formed in an approximately plate shape. The first annular flat plate part 44c is integrally provided on the other axial side of the first fixed tubular part 44a in the axial direction of the rotation shaft 41.

A second abutting part 44d in an annular shape abutted against a first end face EF1 (refer to FIG. 3) on the one axial side of the rotor core 42 is provided on the other axial side of the first annular flat plate part 44c. In other words, the first opposing member 44 is abutted against the rotor core 42 in the axial direction of the rotation shaft 41.

The second abutting part 44d protrudes from the first annular flat plate part 44c to the other axial side thereof, and the second abutting part 44d is in surface contact with the first end face EF1 of the rotor core 42. Accordingly, the axial position of the rotor core 42, which is abutted by the first opposing member 44, is specified by the first ball bearing 23 via the first opposing member 44.

As shown in FIG. 3, protrusions, recesses, etc. are not formed on the one axial side of the first annular flat plate part 44c. In other words, the one axial side of the first annular flat plate part 44c is an annular flat surface.

Furthermore, as shown in FIG. 3, a first taper part 44e in an annular shape is provided at an outer circumferential part of the second abutting part 44d. The first taper part 44e is an inclined surface inclined at an inclination angle of approximately 45 degrees with respect to the axial direction of the rotation shaft 41. Specifically, as shown in FIG. 3, the first taper part 44e is inclined to gradually approach the first annular flat plate part 44c as the first taper part 44e extends radially outward from the second abutting part 44d.

Then, as shown in FIG. 3, the first inner circumferential corner part 43b of the first end part 43a provided on the one axial side of the ring magnet 43 is in line contact with the first taper part 44e from the other axial side of the rotation shaft 41. In other words, by pressing the ring magnet 43 from the other axial side toward the one axial side, the ring magnet 43 is self-aligned by the first opposing member 44, and accordingly, the axis of the ring magnet 43 and the axis of the rotor core 42 fixed to the rotation shaft 41 are aligned without shifting with respect to each other.

In this manner, the first opposing member 44 has a self-aligning function of performing centering of the ring magnet 43.

### <Second opposing member>

As shown in FIG. 2 and FIG. 4, the second opposing member 45 is disposed on the other axial side of the rotation shaft 41, i.e., on a side opposite to the small-diameter part 41a side. Similar to the first opposing member 44, the second opposing member 45 is composed of a PPS resin containing glass fiber, and is opposed to the ring magnet 43 in the axial direction of the rotation shaft 41.

The second opposing member 45 includes a second fixed tubular part 45a that is fixed by press-fitting to the rotation shaft 41. A spring support part 45b in an annular shape supporting the one axial side of a rattle suppression spring SP is provided on the other axial side of the second fixed tubular part 45a.

Herein, the other axial side of the rattle suppression spring SP is supported by the inner ring 26b of the second ball bearing 26. In addition, the rattle suppression spring SP is disposed between the spring support part 45b and the inner ring 26b in a state in which an initial load is applied. Accordingly, the rotor 40 and the rattle suppression spring SP are disposed to be braced between the inner ring 23b of the first ball bearing 23 and the inner ring 26b of the second ball bearing 26.

Thus, the inner rings 23b and 26b of the first ball bearing 23 and the second ball bearing 26 are suppressed from rattling in the axial direction with respect to the outer rings 23a and 26a, respectively. Therefore, it becomes possible to rotate the rotor 40 stably at high speed, and occurrence of mechanical noise is also suppressed.

In addition, the second opposing member 45 includes a second annular flat plate part 45c. The second annular flat plate part 45c is formed to have a larger diameter than the second fixed tubular part 45a, and is formed in an approximately plate shape. The second annular flat plate part 45c is integrally provided on the one axial side of the second fixed tubular part 45a in the axial direction of the rotation shaft 41.

Furthermore, an annular protrusion 45d protruding toward the rotor core 42 by a specified height is provided on the one axial side of the second annular flat plate part 45c. In the axial direction of the rotation shaft 41, an adhesive pool SC, which is an annular space, is formed between a second end face EF2 on the other axial side of the rotor core 42 and the annular protrusion 45d. In other words, the second opposing member 45 is separated from the rotor core 42 in the axial direction of the rotation shaft 41.

As shown in FIG. 4, protrusions, recesses, etc. are not formed on the other axial side of the second annular flat plate part 45c. In other words, the other axial side of the second annular flat plate part 45c is an annular flat surface.

In addition, as shown in FIG. 4, a second taper part 45e in an annular shape is provided at an outer circumferential part of the annular protrusion 45d. The second taper part 45e is an inclined surface inclined at an inclination angle of approximately 45 degrees with respect to the axial direction of the rotation shaft 41. Specifically, as shown in FIG. 4, the second taper part 45e is inclined to gradually approach the second annular flat plate part 45c as the second taper part 45e extends radially outward from the annular protrusion 45d.

As shown in FIG. 4, the second inner circumferential corner part 43d of the second end part 43c provided on the other axial side of the ring magnet 43 is in line contact with the second taper part 45e from the one axial side of the rotation shaft 41. In other words, by pressing the second opposing member 45 to the other axial side of the ring magnet 43, the ring magnet 43 is self-aligned by the second opposing member 45, and accordingly, the axis of the ring magnet 43 and the axis of the rotor core 42 fixed to the rotation shaft 41 are aligned without shifting with respect to each other.

In other words, similar to the first opposing member 44, the second opposing member 45 has a self-aligning function of performing centering of the ring magnet 43.

Thus, in this embodiment, by providing the first opposing member 44 and the second opposing member 45 on both axial sides of the ring magnet 43, the axis of the ring magnet 43 and the axis of the rotor core 42 fixed to the rotation shaft 41 are aligned without shifting with respect to each other. The mechanism (action) of self-alignment by the first opposing member 44 and the second opposing member 45 will be described in detail later.

### <Speed reduction mechanism part>

As shown in FIG. 2 and FIG. 3, the speed reduction mechanism part 50 includes a speed reducer housing 51. The speed reducer housing 51 is formed into a bottomed tubular shape by, for example, performing deep drawing on a steel plate, and a cross-sectional shape along a direction perpendicular to the longitudinal direction thereof is approximately square.

An annular bottom wall 52 abutted against the bottom wall part 22 of the motor case 21 in the axial direction of the rotation shaft 41 is provided on the other axial side of the speed reducer housing 51. A fitting tube 52a, to which the bearing support tube 22a of the motor case 21 is fitted, is integrally provided at a center of the annular bottom wall 52. Accordingly, the speed reducer housing 51 is disposed coaxially with respect to the motor case 21.

A pair of screw through holes (not shown) into which the fixing screws S for fixing the speed reduction mechanism part 50 to the electric motor part 20 are inserted are provided in the annular bottom wall 52. Specifically, the pair of screw through holes are respectively opposed to the pair of screw holes 22b provided in the bottom wall part 22 of the motor case 21 in the axial direction of the rotation shaft 41.

**In** addition, an opening 53 is provided on the one axial side of the speed reducer housing 51, i.e., on a side opposite to the annular bottom wall 52 side. The planetary gear speed reduction mechanism 60 is incorporated on the inner side of the speed reducer housing 51 via the opening 53. An engagement shoulder part SH is provided on the one axial side of the planetary gear speed reduction mechanism 60, and an engagement claw 51a of the speed reducer housing 51 is engaged with the engagement shoulder part SH. Accordingly, the planetary gear speed reduction mechanism 60 is in a state that the planetary gear speed reduction mechanism 60 does not rattle and is prevented from coming off with respect to the speed reducer housing 51.

As shown in FIG. 5 to FIG. 8, the planetary gear speed reduction mechanism 60 includes a gear case 61 that is formed in an approximately box shape, and is composed of a case body CB and a blocking member 63. In other words, the gear case 61 and the motor case 21 are arranged in the axial direction of the rotation shaft 41. An internal gear 61a is formed on the radially inner side of the case body CB, and a case opening 61d of the case body CB is blocked by the blocking member 63.

The case body CB is composed of a resin material such as plastic and includes a large-diameter part 61b and a small-diameter part 61c. Specifically, the large-diameter part 61b is disposed on the other axial side of the case body CB, and the small-diameter part 61c is disposed on the one axial side of the case body CB. The internal gear 61a is provided over the entire axial direction of the large-diameter part 61b.

In contrast, a third ball bearing 62 having an outer ring 62a and an inner ring 62b is accommodated on the radially inner side of the small-diameter part 61c (refer to FIG. 3). Specifically, the outer ring 62a of the third ball bearing 62 is press-fitted and fixed to the radially inner side of the small-diameter part 61c, and the inner ring 62b of the third ball bearing 62 rotatably supports an output shaft 84 that forms a second planetary gear reducer 80. The output shaft 84 of the second planetary gear reducer 80 is connected in a manner capable of transmitting power to a reclining mechanism or the like (not shown).

Herein, as shown in FIG. 5 and FIG. 6, between the large-diameter part 61b and the small-diameter part 61c in the axial direction of the case body CB, a flange part FL is integrally provided, which is formed in an approximately square shape when viewed in the axial direction, and has corner parts that bulge toward the radially outer side. Then, on the flange part FL, a pair of engagement shoulder parts SH are provided in opposing arrangement centered on the large-diameter part 61b and the small-diameter part 61c.

In addition, as shown in FIG. 6, the case opening 61d is provided on the other axial side of the case body CB. The first planetary gear reducer 70 and the second planetary gear reducer 80 (refer to FIG. 9) are incorporated on the inner side of the gear case 61 via this case opening 61d.

The annular blocking member 63 (refer to FIG. 7 and FIG. 8) is mounted to the case opening 61d of the case body CB. Herein, the blocking member 63 is press-fitted and fixed to the case opening 61d with the axis precisely aligned using a jig or the like. That is, the center axis of the case body CB and the center axis of the blocking member 63 are aligned with each other.

Specifically, the blocking member 63 includes an annular body 63a, and a through hole 63b is provided at a center of the annular body 63a. The through hole 63b is fitted and fixed to an approximately 1/3 portion of the one axial side of the outer ring 23a of the first ball bearing 23.

In other words, both axial sides of the first ball bearing 23, i.e., both axial sides of the outer ring 23a, are respectively mounted (fixed) to the bearing support tube 22a of the motor case 21 and the through hole 63b of the blocking member 63.

It should be noted that the through hole 63b of the blocking member 63 is disposed coaxially with respect to the first sun gear 71 of the first planetary gear reducer 70, and corresponds to a second bearing mounting part in the disclosure.

Thereby, the center axis of the blocking member 63 (planetary gear speed reduction mechanism 60) and the center axis of the first ball bearing 23 are precisely aligned without shifting with respect to each other. Accordingly, the driving force of the rotation shaft 41, which is rotatably supported by the first ball bearing 23, is efficiently transmitted to the planetary gear speed reduction mechanism 60.

The first planetary gear reducer 70 disposed on the input side (electric motor part 20 side) and the second planetary gear reducer 80 disposed on the output side (the side where the reclining mechanism or the like is provided) are accommodated inside the gear case 61. That is, the first planetary gear reducer 70 and the second planetary gear reducer 80 are arranged in a manner capable of transmitting power in the axial direction of the rotation shaft 41, and the planetary gear speed reduction mechanism 60 performs two-stage speed reduction. Accordingly, diameter reduction of the planetary gear speed reduction mechanism 60 is realized.

Additionally, as shown in FIG. 7 and FIG. 8, a total of 8 fitting protrusions 63c are provided at an outer circumferential part of the annular body 63a, and these fitting protrusions 63c are fixed by press-fitting to the case opening 61d. It should be noted that the fitting protrusions 63c protrude on the radially outer side of the annular body 63a at a minute height, and are relatively easily crushed when press-fitted into the case opening 61d. Therefore, it is possible to fix the blocking member 63 to the case opening 61d with the axes precisely aligned.

Furthermore, as shown in FIG. 7, a small-diameter annular support part 63d and a large-diameter annular support part 63e are provided on the one axial side of the annular body 63a. These small-diameter annular support part 63d and large-diameter annular support part 63e protrude from the annular body 63a to the one axial side at a predetermined height. Further, the other axial side of the first planetary gear 72 (refer to FIG. 3) can be slidably in contact with the small-diameter annular support part 63d and the large-diameter annular support part 63e. Therefore, the first planetary gear 72 becomes smoothly rotatable.

In addition, as shown in FIG. 8, a total of 4 abutting leg parts 63f are provided on the other axial side of the annular body 63a. These abutting leg parts 63f are disposed at equal intervals (90-degree intervals) in the circumferential direction of the annular body 63a, and are abutted against the annular bottom wall 52 of the speed reducer housing 51 in the axial direction of the rotation shaft 41. In the circumferential direction of the annular body 63a, recessed spaces SE are provided at 90-degree intervals between adjacent abutting leg parts 63f. A pair of recessed spaces SE disposed in opposing arrangement at 180-degree intervals among these recessed spaces SE accommodate the screw heads (not shown) of the fixing screws S (refer to FIG. 2 and FIG. 3).

### <First planetary gear reducer>

As shown in FIG. 3 and FIG. 9, the first planetary gear reducer 70 includes a first sun gear 71 that is mounted to the small-diameter part 41a of the rotation shaft 41 and functions as an input part of the first planetary gear reducer 70. The first sun gear 71 is disposed at a center of the first planetary gear reducer 70 and is rotated by the rotation shaft 41. And, the first sun gear 71 is press-fitted and fixed to the small-diameter part 41a, and is disposed coaxially with high precision with respect to the small-diameter part 41a.

In addition, the first planetary gear reducer 70 includes three first planetary gears 72 (only two are shown in the figure) that are meshed with both the internal gear 61a provided at the case body CB and the first sun gear 71, and rotate around the first sun gear 71. The first planetary gears 72 are each rotatably supported by a first carrier 73, which forms the first planetary gear reducer 70. Specifically, the three first planetary gears 72 are disposed at equal intervals (120-degree intervals) in the circumferential direction of the first carrier 73.

That is, multiple first planetary gears 72 rotatably supported by the first carrier 73 are disposed between the internal gear 61a and the first sun gear 71. It should be noted that the first carrier 73 corresponds to a carrier in the disclosure, and the first planetary gear 72 corresponds to a planetary gear in the disclosure.

Additionally, the one axial side of the first planetary gear 72 is rotatably abutted against the first carrier 73, and the other axial side of the first planetary gear 72 is rotatably abutted against the small-diameter annular support part 63d and the large-diameter annular support part 63e of the blocking member 63. Thus, the three first planetary gears 72 rotate smoothly without rattling in the axial direction of the rotation shaft 41.

Herein, since the first abutting part 44b of the first opposing member 44 is abutted against the inner ring 23b of the first ball bearing 23, the one axial side of the first sun gear 71 is disposed at a specified position separated by a distance L3 from the one axial side of the inner ring 23b. Thus, the first sun gear 71 does not contact the first carrier 73 in the axial direction of the rotation shaft 41, and is properly meshed with each of the first planetary gears 72.

The planetary gear speed reduction mechanism 60 is centered by the first ball bearing 23 via the blocking member 63 (gear case 61). Furthermore, the rotation shaft 41 of the rotor 40 is also centered by the first ball bearing 23. Accordingly, the rotation center of the planetary gear speed reduction mechanism 60 and the rotation center of the rotor 40 including the first sun gear 71 are aligned with high precision with each other by the first ball bearing 23. Thus, similar to the rotor 40, the planetary gear speed reduction mechanism 60 is also capable of rotating stably at high speed, and generation of mechanical noise is also suppressed.

In addition, a second sun gear 81 that functions as an output part of the first planetary gear reducer 70 and functions as an input part of the second planetary gear reducer 80 is provided on the one axial side of the first carrier 73. The second sun gear 81 is hollow and is disposed on the axis of the first carrier 73.

### <Second planetary gear reducer>

As shown in FIG. 3 and FIG. 9, the second planetary gear reducer 80 includes the second sun gear 81 integrally provided at the first carrier 73 of the first planetary gear reducer 70.

**In** addition, the second planetary gear reducer 80 includes three second planetary gears 82 (only two are shown in the figure) that are meshed with both the internal gear 61a provided at the case body CB and the second sun gear 81, and rotate around the second sun gear 81. The second planetary gears 82 are each rotatably supported by a second carrier 83, which forms the second planetary gear reducer 80. Specifically, the three second planetary gears 82 are disposed at equal intervals (120-degrees intervals) in the circumferential direction of the second carrier 83.

That is, multiple second planetary gears 82 rotatably supported by the second carrier 83 are disposed between the internal gear 61a and the second sun gear 81.

The one axial side of the second planetary gear 82 is rotatably abutted against the second carrier 83, and the other axial side of the second planetary gear 82 is rotatably abutted against the first carrier 73 via a seat member ST. Thus, the three second planetary gears 82 also rotate smoothly without rattling in the axial direction of the rotation shaft 41.

In addition, an output shaft 84 that functions as an output part of the second planetary gear reducer 80 is integrally provided on the one axial side of the second carrier 83. Herein, the output shaft 84 is rotatably supported by the inner ring 62b of the third ball bearing 62, and the reclining mechanism or the like (not shown) is connected to the output shaft 84 in a manner capable of transmitting power.

Herein, a pin hole 83a is provided on the axis of the second carrier 83, and the one axial side of a support pin PN is mounted to the pin hole 83a. In addition, the other axial side of the support pin PN is mounted to a hollow part 81a provided in the second sun gear 81. The support pin PN has a function of aligning the center axis of the first carrier 73 (second sun gear 81) and the center axis of the second carrier 83 (output shaft 84) with each other, and supporting both to be relatively rotatable with each other.

In this manner, the planetary gear speed reduction mechanism 60 performs two-stage speed reduction by the first planetary gear reducer 70 and the second planetary gear reducer 80. The rotational speed of the rotor 40 (rotation shaft 41), which is rotated at high speed, is reduced to a specified rotational speed, and the rotational force, which has been reduced in speed and increased in torque, is outputted from the output shaft 84 to the reclining mechanism or the like (not shown).

### <Assembly procedure of rotor>

Next, an assembly procedure of the rotor 40, i.e., a manufacturing method of the rotor 40, will be described in detail with reference to the drawings.

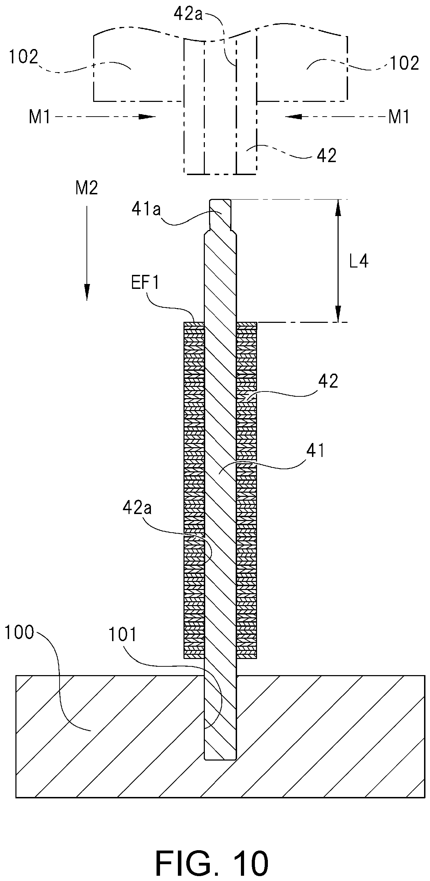

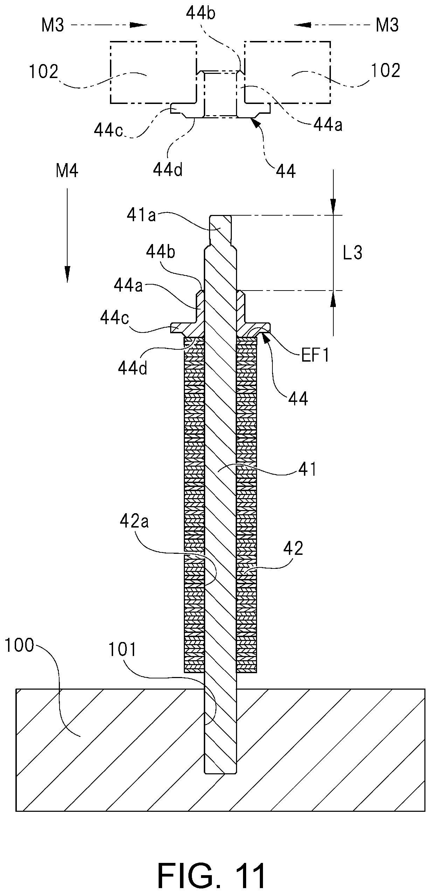

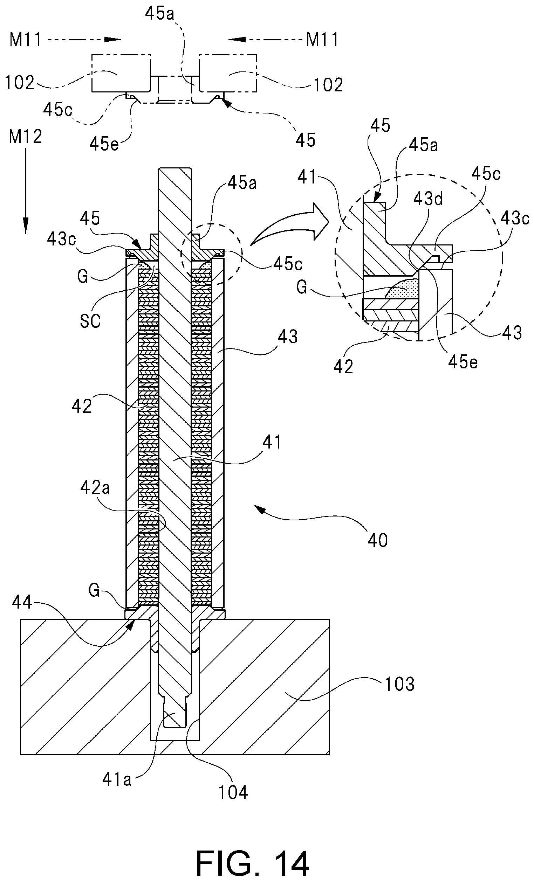

FIG. 10 shows a view illustrating a <rotor core mounting process>. FIG. 11 shows a view illustrating a <first opposing member mounting process>. FIG. 12 shows a view illustrating an <adhesive application process>. FIG. 13 shows a view illustrating a <ring magnet mounting process>. FIG. 14 shows a view illustrating a <second opposing member abutting process>.

### <Rotor core mounting process>

As shown in FIG. 10, first, the rotation shaft 41 and the rotor core 42, which have been manufactured through separate manufacturing processes, are prepared. Next, the rotation shaft 41 is set on a first work table 100. Specifically, the other axial side of the rotation shaft 41, i.e., the side opposite to the small-diameter part 41a side in the axial direction of the rotation shaft 41, is inserted into an insertion hole 101 of the first work table 100. Accordingly, setting of the rotation shaft 41 to the first work table 100 is completed.

Afterward, the rotor core 42 is grasped by a pair of lifting arms 102 capable of rising and lowering with respect to the first work table 100, as indicated by a double-dot dashed line arrow M1. Next, the pair of lifting arms 102 are lowered as indicated by a solid line arrow M2, and the other axial side of the rotor core 42 is brought to face the one axial side of the rotation shaft 41. Then, the pair of lifting arms 102 continue to be lowered, and the fixing hole 42a of the rotor core 42 is press-fitted from the small-diameter part 41a side of the rotation shaft 41.

Subsequently, the lifting arms 102 continue to be further lowered, and the rotor core 42 is positioned at a specified position in the axial direction of the rotation shaft 41 shown in FIG. 10. Specifically, the pair of lifting arms 102 are lowered such that the distance between the first end face EF1 of the rotor core 42 and the end part on the one axial side of the small-diameter part 41a becomes L4. The distance L4, which defines the specified position, is managed with high precision by a controller (not shown) that controls the pair of lifting arms 102.

Accordingly, a press-fitting work (mounting work) of the rotor core 42 to the rotation shaft 41 is ended, and the <rotor core mounting process> is completed.

### <First opposing member mounting process>

Next, as shown in FIG. 11, the first opposing member 44, which has been manufactured through a separate manufacturing process, is prepared. Then, the first opposing member 44 is grasped by the pair of lifting arms 102, as indicated by a double-dot dashed line arrow M3. At this time, the pair of lifting arms 102 are caused to grasp the first fixed tubular part 44a of the first opposing member 44.

Subsequently, the pair of lifting arms 102 are lowered as indicated by a solid line arrow M4, and the other axial side (first annular flat plate part 44c side) of the first opposing member 44 is brought to face the one axial side of the rotation shaft 41. Then, the pair of lifting arms 102 continue to be lowered, and the first fixed tubular part 44a of the first opposing member 44 is press-fitted to the rotation shaft 41 from the small-diameter part 41a side in the axial direction of the rotation shaft 41.

Next, the lifting arms 102 continue to be further lowered, and the first opposing member 44 is positioned at a specified position in the axial direction of the rotation shaft 41 shown in FIG. 11. Specifically, the second abutting part 44d of the first opposing member 44 is abutted against the first end face EF1 of the rotor core 42. Accordingly, the first opposing member 44 is positioned with high precision with respect to the rotation shaft 41 and the rotor core 42 such that the distance between the first abutting part 44b of the first opposing member 44 and the end part on the one axial side of the small-diameter part 41a becomes L3 (refer to FIG. 3).

Accordingly, the first opposing member 44 is abutted against the rotor core 42, a press-fitting work (mounting work) of the first opposing member 44 to the rotation shaft 41 is ended, and the <first opposing member mounting process> is completed.

### <Adhesive application process>

Next, as indicated by a solid line arrow M5 in FIG. 12, the rotation shaft 41 mounted with the rotor core 42 and the first opposing member 44 is inverted upside down. Then, the first fixed tubular part 44a of the first opposing member 44 is inserted into an insertion hole 104 of a second work table 103. Accordingly, setting of the rotation shaft 41, which is mounted with the rotor core 42 and the first opposing member 44, to the second work table 103 is completed.

Subsequently, an adhesive supply nozzle 105 is brought to face the outer circumferential part on the other axial side (upper side in the figure) of the rotor core 42. Then, the adhesive G is discharged from the adhesive supply nozzle 105, and the adhesive G is applied to the outer circumferential part of the rotor core 42. Specifically, with the adhesive G discharged from the adhesive supply nozzle 105, as indicated by a solid line arrow M6, the adhesive supply nozzle 105 is moved in a spiral pattern from the other axial side toward the one axial side (lower side in the figure) of the rotor core 42 (refer to broken lines).

Accordingly, a specified amount of the adhesive G is applied in a spiral pattern to the outer circumferential part of the rotor core 42, and the <adhesive application process> is completed.

### <Ring magnet mounting process>

Next, as shown in FIG. 13, the ring magnet 43, which has been manufactured through a separate manufacturing process, is prepared. Then, the ring magnet 43 is grasped by the pair of lifting arms 102, as indicated by a double-dot dashed line arrow M7.

Subsequently, the pair of lifting arms 102 are lowered as indicated by a solid line arrow M8, and the one axial side (first end part 43a side) of the ring magnet 43 is brought to face the other axial side of the rotation shaft 41. Then, the pair of lifting arms 102 continue to be lowered, and the ring magnet 43 is mounted to the outer circumferential part of the rotor core 42 from the side opposite to the small-diameter part 41a side in the axial direction of the rotation shaft 41. At this time, since there is a minute gap (not shown), in which the adhesive G is interposed, between the outer circumferential part of the rotor core 42 and the inner circumferential part of the ring magnet 43, the ring magnet 43 is capable of being easily mounted to the rotor core 42 with a relatively small load.

Next, the pair of lifting arms 102 are further lowered to abut the first inner circumferential corner part 43b of the first end part 43a of the ring magnet 43 against the first taper part 44e of the first opposing member 44 with a specified pressing force. In other words, the first taper part 44e and the first inner circumferential corner part 43b are abutted against each other. Accordingly, the ring magnet 43 and the first opposing member 44 are opposed to each other in the axial direction of the rotation shaft, and the ring magnet 43 is self-aligned by the first opposing member 44. Thus, the axis of the ring magnet 43 and the axis of the rotor core 42 are aligned with each other.

At this time, the adhesive G spreads evenly throughout the minute gap between the outer circumferential part of the rotor core 42 and the inner circumferential part of the ring magnet 43 and fills the minute gap. Herein, excess adhesive G overflows on both axial sides of the rotor core 42, but the application amount of the adhesive G is determined considering occurrence of the excess amount in advance. Thus, the excess adhesive G is suppressed to a necessary minimum amount.

Specifically, as indicated by a solid line arrow M9, the adhesive G that overflows on the one axial side of the rotor core 42 reaches from the minute gap between the outer circumferential part of the rotor core 42 and the inner circumferential part of the ring magnet 43, to between the first end part 43a of the ring magnet 43 and the first annular flat plate part 44c of the first opposing member 44. The excess adhesive G that reaches between the first end part 43a and the first annular flat plate part 44c does not overflow radially outward beyond the ring magnet 43 and the first annular flat plate part 44c.

In addition, as indicated by a solid line arrow M10, the adhesive G that overflows on the other axial side of the rotor core 42 reaches from the minute gap between the outer circumferential part of the rotor core 42 and the inner circumferential part of the ring magnet 43 to the adhesive pool SC (refer to FIG. 4). The excess adhesive G that reaches the adhesive pool SC does not overflow to outside the adhesive pool SC.

In this manner, the excess adhesive G does not overflow radially outward beyond the ring magnet 43 and the first annular flat plate part 44c, and does not overflow to outside the adhesive pool SC. Thus, after assembling the rotor 40, a work such as removing the overflowed adhesive G is not required, and simplification of the assembly process of the rotor 40 becomes possible.

Accordingly, the ring magnet 43 is mounted to the outer circumferential part of the rotor core 42, and the <ring magnet mounting process> is completed.

### <Second opposing member abutting process>

Next, as shown in FIG. 14, the second opposing member 45, which has been manufactured through a separate manufacturing process, is prepared. Then, the second opposing member 45 is grasped by the pair of lifting arms 102, as indicated by a double-dot dashed line arrow M11. At this time, the pair of lifting arms 102 is caused to grasp the second fixed tubular part 45a of the second opposing member 45.

Subsequently, the pair of lifting arms 102 are lowered as indicated by a solid line arrow M12, and the one axial side (second annular flat plate part 45c side) of the second opposing member 45 is brought to face the other axial side of the rotation shaft 41. Then, the pair of lifting arms 102 continue to be lowered, and the second fixed tubular part 45a of the second opposing member 45 is press-fitted to the rotation shaft 41 from the side opposite to the small-diameter part 41a side in the axial direction of the rotation shaft 41.

Next, the lifting arms 102 continue to be further lowered, and the second taper part 45e provided at the second opposing member 45 is abutted against the second inner circumferential corner part 43d provided at the ring magnet 43. Accordingly, the ring magnet 43 and the second opposing member 45 are opposed to each other in the axial direction of the rotation shaft 41, and the ring magnet 43 is self-aligned by the second opposing member 45. Thus, the axis of the ring magnet 43 and the axis of the rotor core 42 are aligned with each other.

Herein, by providing the first opposing member 44 and the second opposing member 45 on both axial sides of the ring magnet 43, it is possible to align the axis of the ring magnet 43 with the axis of the rotor core 42 over the entire longitudinal direction of the ring magnet 43. However, a self-aligning work of the ring magnet 43 by the first opposing member 44 and the second opposing member 45 is performed before the adhesive G hardens. As the adhesive G, for example, a thermosetting adhesive that hardens by applying heat may be used.

As described above, the second opposing member 45 is abutted against the ring magnet 43, and the ring magnet 43 is held between the first opposing member 44 and the second opposing member 45 without rattling. Accordingly, the <second opposing member abutting process> is completed, and the assembly work of the rotor 40 is ended.

As described in detail above, according to this embodiment, there are provided the first ball bearing 23 that rotatably supports the rotation shaft 41, and the first sun gear 71 that is mounted to the end part of the rotation shaft 41 and is disposed at the center of the first planetary gear reducer 70. In the motor case 21, the bearing support tube 22a is provided which is disposed coaxially with respect to the rotation shaft 41; and in the gear case 61, the through hole 63b of the blocking member 63 is provided which is disposed coaxially with respect to the first sun gear 71. Both axial sides of the first ball bearing 23 are respectively mounted to the bearing support tube 22a and the through hole 63b.

Accordingly, regardless of the molding accuracy of the motor case 21, the rotation center of the rotation shaft 41 (electric motor part 20) and the rotation center of the first planetary gear reducer 70 (speed reduction mechanism part 50) can be precisely aligned with each other based on the first ball bearing 23. As a result, it becomes possible to smoothly transmit the driving force from the rotation shaft 41 to the first planetary gear reducer 70 and the second planetary gear reducer 80, and variations in motor characteristics among products can be suppressed.

In addition, according to this embodiment, the first ball bearing 23 includes the outer ring 23a disposed on the radially outer side, the inner ring 23b disposed on the radially inner side, and the steel balls 23c disposed between the outer ring 23a and the inner ring 23b. Both axial sides of the outer ring 23a are respectively fixed to the bearing support tube 22a and the through hole 63b.

Thereby, the fixing strength of the bearing support tube 22a of the motor case 21 and the through hole 63b of the blocking member 63 for the outer ring 23a can be increased, and the rotation shaft 41 can be supported to rotate more smoothly by the inner ring 23b. In addition, a general-purpose ball bearing can be used, making it possible to achieve cost reduction.

Furthermore, according to this embodiment, the gear case 61 includes the case body CB having the internal gear 61a on the radially inner side, and three first planetary gears 72 rotatably supported by the first carrier 73 are disposed between the internal gear 61a and the first sun gear 71.

Thereby, multiple planetary gear reducers (in this embodiment, a pair of first planetary gear reducer 70 and second planetary gear reducer 80) can be arranged in the axial direction of the gear case 61 while suppressing the outer diameter of the gear case 61 from becoming larger. Therefore, it is possible to obtain a large reduction ratio for a motor device having a rod-shaped outer shell.

Furthermore, according to this embodiment, since it is possible to prevent variations in motor characteristics of the seat motor 10 among products, the trouble such as reassembling the seat motor 10 can be eliminated. Therefore, it becomes possible to reduce manufacturing energy, and to achieve particularly Goal 7 (Ensure access to affordable, reliable, sustainable and modern energy for all) and Goal 13 (Take urgent action to combat climate change and its impacts) of the Sustainable Development Goals (SDGs) established by the United Nations.

The disclosure is not limited to the above embodiment, and obviously, various changes may be made within the scope that does not deviate from the gist thereof. For example, the above embodiment has shown that the first taper part 44e and the second taper part 45e are provided at the first opposing member 44 and the second opposing member 45, and the first inner circumferential corner part 43b and the second inner circumferential corner part 43d are provided on both axial sides of the ring magnet 43, and these are used as a self-aligning function. The disclosure is not limited thereto, and conversely, taper parts may be provided on both axial sides of the ring magnet, and abutting parts abutted against the taper parts may be provided respectively at the first opposing member and the second opposing member. Furthermore, a taper part may be provided at the first opposing member, an abutting part may be provided on the one axial side of the ring magnet, a taper part may be provided on the other axial side of the ring magnet, and an abutting part may be provided at the second opposing member.

In addition, the above embodiment has shown the seat motor 10 as an example of the motor device, but the disclosure is not limited thereto, and may also be applied to driving sources for other vehicle-mounted devices, such as a power window device and a sunroof device.

Furthermore, the materials, shapes, dimensions, numbers, arrangement spots, etc. of constituent elements in the above embodiment may be configured in any manner and are not limited to the above embodiment, as long as the disclosure can be achieved.

### [Reference Signs List]

10: seat motor (motor device), 20: electric motor part, 21: motor case, 21a: engagement claw, 22: bottom wall part, 22a: bearing support tube (first bearing mounting part), 22b: screw hole, 23: first ball bearing (bearing, ball bearing), 23a: outer ring (outer race), 23b: inner ring (inner race), 23C: steel ball (ball), 24: opening part, 25: cover member, 25a: engagement recess, 25b: bearing support hole, 26: second ball bearing, 26a: outer ring, 26b: inner ring, 27: conductive member holding plate, 28: conductive member, 29: sensor board, 29a: hall element, 30: stator, 31: stator body, 32: teeth, 33: insulator, 34: coil, 40: rotor, 41: rotation shaft, 41a: small-diameter part, 42: rotor core, 42a: fixing hole, 43: ring magnet, 43a: first end part, 43b: first inner circumferential corner part, 43c: second end part, 43d: second inner circumferential corner part, 44: first opposing member, 44a: first fixed tubular part, 44b: first abutting part, 44c: first annular flat plate part, 44d: second abutting part, 44e: first taper part, 45: second opposing member, 45a: second fixed tubular part, 45b: spring support part, 45c: second annular flat plate part, 45d: annular protrusion, 45e: second taper part, 50: speed reduction mechanism part, 51: speed reducer housing, 51a: engagement claw, 52: annular bottom wall, 52a: fitting tube, 53: opening, 60: planetary gear speed reduction mechanism, 61: gear case, 61a: internal gear, 61b: large-diameter part, 61c: small-diameter part, 61d: case opening, 62: third ball bearing, 62a: outer ring, 62b: inner ring, 63: blocking member (gear case), 63a: annular body, 63b: through hole (second bearing mounting part), 63c: fitting protrusion, 63d: small-diameter annular support part, 63e: large-diameter annular support part, 63f: abutting leg part, 70: first planetary gear reducer (planetary gear reducer), 71: first sun gear (sun gear), 72: first planetary gear (planetary gear), 73: first carrier (carrier), 80: second planetary gear reducer, 81: second sun gear, 81a: hollow part, 82: second planetary gear, 83: second carrier, 83a: pin hole, 84: output shaft, 100: first work table, 101: insertion hole, 102: lifting arm, 103: second work table, 104: insertion hole, 105: adhesive supply nozzle, CB: case body (gear case), CN: connector, CU: vehicle-mounted controller, EF1: first end face, EF2: second end face, FL: flange part, G: adhesive, PL: power cord, PN: support pin, S: fixing screw, SC: adhesive pool, SE: recessed space, SH: engagement shoulder part, SP: rattle suppression spring, ST: seat member, SW: sensor wire

## Claims

1. A motor device (10), comprising:
a motor case (21) rotatably accommodating a rotation shaft (41);
a gear case (61) rotatably accommodating a planetary gear reducer (70), wherein the motor case and the gear case are arranged in an axial direction of the rotation shaft;
a bearing (23) rotatably supporting the rotation shaft; and
a sun gear (71) mounted to an end part of the rotation shaft and disposed at a center of the planetary gear reducer,
wherein the motor case is provided with a first bearing mounting part (22a) that is disposed coaxially with respect to the rotation shaft,
the gear case is provided with a second bearing mounting part (63b) that is disposed coaxially with respect to the sun gear, and
both axial sides of the bearing are respectively mounted to the first bearing mounting part and the second bearing mounting part.

2. The motor device as claimed in claim 1, wherein
the bearing is a ball bearing comprising:
an outer race (23a) disposed on a radially outer side;
an inner race (23b) disposed on a radially inner side; and
a ball (23c) disposed between the outer race and the inner race, and
both axial sides of the outer race are respectively fixed to the first bearing mounting part and the second bearing mounting part.

3. The motor device as claimed in claim 1 or claim 2, wherein
the gear case comprises a case body (CB) that has an internal gear (61a) on a radially inner side, and
a plurality of planetary gears (72) that are rotatably supported by a carrier (73) are disposed between the internal gear and the sun gear.
